(19) Europäisches Patentamt
European Patent Office
Office européen des brevets

(11) **EP 4 764 472 A1**

(12) **EUROPEAN PATENT APPLICATION**

(43) Date of publication:
**24.06.2026 Bulletin 2026/26**

(21) Application number: **25226615.0**

(22) Date of filing: **22.12.2025**

(51) International Patent Classification (IPC):
*G01N 23/041* (2018.01)

(52) Cooperative Patent Classification (CPC):
**G01N 23/041; G21K 7/00;** G01N 2223/316;
G21K 2207/005

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.12.2024 US 202419000476**

(71) Applicant: **Carl Zeiss X-Ray Microscopy, Inc.
Dublin, California 94568 (US)**

(72) Inventors:
• XU, Shiqi
  **Dublin, CA, 94568 (US)**
• ANDREW, Matthew
  **Dublin, CA, 94568 (US)**
• KRAMPERT, Gerhard
  **Dublin, CA, 94568 (US)**
• CHEN, Zhenyang
  **Dublin, CA, 94568 (US)**

(74) Representative: **Gulde & Partner
Patent- und Rechtsanwaltskanzlei mbB
Berliner Freiheit 2
10785 Berlin (DE)**

(54) **COMPACT PHASE AND DARKFIELD LABORATORY X-RAY IMAGING SYSTEM AND METHOD**

(57) An X-ray microscopy system and method for phase contrast and dark-field imaging are provided, utilizing a partially coherent X-ray beam generated by a micro-focused X-ray source with a small focal spot size. A spatial beam modulator such as a random phase object, e.g., silicon carbide sandpaper, is placed between the source and the sample to create a random granular speckle pattern. The system employs a high-resolution detection setup with a thin scintillator and a spatially resolved detector with small pixel size to capture shifts in the speckle pattern caused by the sample's refraction effects. By analyzing these shifts, the system computes phase gradients and integrates them to produce detailed phase images, enhancing contrast in low-atomic-number materials like soft tissues and polymers. The compact design reduces source-to-detector distance, improving flux efficiency and system throughput while enabling high-resolution, three-dimensional tomographic imaging.

Fig. 2

EP 4 764 472 A1

**Description**

FIELD OF THE DISCLOSURE

Embodiments of the present disclosure relate to the field of X-ray imaging and, in particular, phase contrast and dark-field imaging.

TECHNOLOGICAL BACKGROUND

X-ray microscopy leverages the differential absorption of X-rays by materials to generate highly detailed images with micro to nanoscale resolution. When X-rays pass through a sample, their absorption varies based on the atomic composition, density, and thickness of the microscopic structures. This differential absorption is primarily influenced by mechanisms such as the photoelectric effect and Compton scattering. The photoelectric effect plays a crucial role in generating contrast because materials with higher atomic numbers, such as metal inclusions or mineral phases, will attenuate X-rays more than materials or compositions with lower atomic numbers, like organic materials or polymers. As X-rays penetrate the sample, some are absorbed while others pass through, leading to a variation in the X-ray intensity that is ultimately detected by specialized detectors.

The X-ray beam intensity that emerges after traversing the sample is detected and converted into an image, providing information about the internal composition with contrast that reveals fine structural details. The attenuation differences are typically visualized as variations in grayscale in the negative X-ray images: denser areas with high absorption appear lighter, while regions of low density or less absorption appear darker. X-ray microscopes can achieve a remarkable level of spatial resolution, using either synchrotron radiation or laboratory X-ray sources, providing insights into materials science, biological structures, and other applications requiring non-destructive, three-dimensional analysis. By adjusting illumination settings including beam energy, X-ray microscopy can optimize the contrast and resolution for a wide range of materials.

Soft tissue and most organic materials, such as polymers, are usually composed of elements with low atomic numbers. These elements exhibit low attenuation in the X-ray spectrum, which results in conventional absorption-based X-ray images showing very low to no contrast when imaging such materials using differential absorption. However, materials made of low-atomic-number elements generally exhibit a higher refractive index change, which bends and scatters X-rays, making them suitable candidates for imaging with phase contrast mechanisms (Endrizzi, Marco. "X-ray phase-contrast imaging." Nuclear instruments and methods in physics research section A: Accelerators, spectrometers, detectors and associated equipment 878 (2018): 88-98. (Endrizzi 2018); Momose, Atsushi. "X-ray phase imaging reaching clinical uses." Physica Medica 79 (2020):

93-102. (Momose 2020)). To describe the physics of these phenomena and underlying mechanisms, the complex refractive index is often used (Endrizzi 2018, Momose 2020), where the imaginary part models the absorption or attenuation of the X-rays, while the spatial change of the real part describes refraction and scattering. Since X-rays are electromagnetic waves, the measurement is typically performed through the retrieval of the phase signal Φ, which can be defined as:

$$\Phi = \frac{2\pi}{\lambda} \int \delta(z)dz \qquad\qquad \text{eq. 1}$$

where is $\lambda$ is the wavelength of the X-ray, and z is the path the X-ray travels. This phase contrast mechanism enables imaging of low-attenuation, low-atomic-number materials with significantly enhanced detail compared to traditional absorption methods, making it particularly powerful for studying soft tissues, polymers, and other organic samples at high resolution.

Due to significant interest in detecting phase (refraction) and dark-field (ultra-small-angle-X-ray-scattering) signals, there is a rich amount of literature on these topics (Endrizzi 2018, Momose 2020). These methods typically attempt to create a visible pattern in the detector plane using gratings or masks, and record this pattern (object absent) as a reference. The sample or object of interest is then presented inside the field of view (FOV), and the phase and dark-field signals can be computationally extracted by analyzing the distortion of the reference pattern. Such methods can be generally categorized into two classes: those using structured patterns (Pfeiffer, Franz, et al. "Phase retrieval and differential phase-contrast imaging with low-brilliance X-ray sources." Nature Physics 2.4 (2006): 258-261 (Pfeiffer 2006), Olivo, Alessandro, and Robert Speller. "A coded-aperture technique allowing X-ray phase contrast imaging with conventional sources." Applied Physics Letters 91.7 (2007): 074106-1-074106-3 (Olivo 2007)) and those using unstructured patterns (Zanette, I., et al. "Speckle-based X-ray phase-contrast and dark-field imaging with a laboratory source." Physical Review Letters 112.25 (2014): 253903 (Zanette 2014)). While all methods originated from synchrotron facilities, which provide high-brilliance, high-coherence sources, they have also been translated into laboratory systems using partially coherent sources (Endrizzi 2018, Zdora2018).

At present, the first category (structured pattern) is more widely implemented in laboratories for two reasons: more relaxed requirements of source coherence (though at the cost of flux dose), and a relatively simpler phase-retrieval algorithm that involves straightforward curve fitting. However, the manufacturing of structured patterns requires advanced fabrication processes, typically demanding intricate electroplating as well as painstaking lithography, which increases system costs. On the other hand, creating an unstructured pattern is significantly easier and cheaper, and can be done using a piece of silicon carbide (SiC) sandpaper, for example. The phase retrieval in these systems is achieved by tracking the random granular pattern with computer vision algorithms (Zdora, Marie-Christine. "State of the art of X-ray speckle-based phase-contrast and dark-field imaging." Journal of Imaging 4.5 (2018): 1-36 (Zdora 2018)). While the hardware add-on is simple and low-cost, the creation of a high-contrast granular speckle pattern poses a higher spatial coherence requirement, and to record and track those granular patterns demands higher resolution detectors.

To achieve sufficient spatial coherence with a large source spot size (e.g., >50 micrometers ($\mu$m)), the sample must be placed meters away from the source, as dictated by the van Cittert-Zernike theorem (Born, Max, and Emil Wolf. Principles of optics: electromagnetic theory of propagation, interference and diffraction of light. Cambridge University Press, (1999) 1-952 (Born & Wolf 1999)). Higher source spatial coherence can be achieved by locating the source away from the sample, making the source spot effectively smaller at the sample plane. Additionally, most historical implementations have used flat-panel type detectors with large pixel sizes at the imaging planes. To detect the small refraction angle change while sufficiently sampling the granular pattern, it is necessary to position the detector meters away from the sample. Therefore, most implementations of such methods using laboratory systems end up requiring multi-meter source-to-detector distances, which is both inefficient (resulting in loss of X-ray flux and therefore reduced throughput) and results in bulky systems.

GENERAL DESCRIPTION

According to one aspect of the present disclosure, an X-ray microscopy system for phase contrast and dark-field imaging is provided that offers enhanced imaging capabilities in a compact design. The system includes a laboratory X-ray source configured to emit an at least partially coherent X-ray beam. The X-ray source may have a focal spot size of less than 5 micrometers, and preferably less than 3 micrometers. This provides a technical advantage of ensuring adequate spatial coherence for speckle pattern generation and detection. The X-ray source may be further configured to generate X-rays with energies of less than 50 keV, and preferably less than 20 keV. This provides a technical advantage of enhancing phase contrast for low-atomic-number materials.

The X-ray microscopy system may include a spatial beam modulator. The spatial beam modulator may be positioned in the path of the X-ray beam to generate a speckle pattern in the field of view (FOV). The spatial beam modulator can be a random phase object, such as a piece of silicon carbide (SiC) sandpaper, or a structured phase object, such as a grating. The spatial beam modulator introduces (e.g. random) granular speckle patterns into the X-ray beam, which are essential for detecting phase shifts and dark-field signals caused by the sample.

The X-ray microscopy system may include a sample stage. The sample stage may be configured to hold and position the sample within the X-ray beam, either before or after the spatial beam modulator. This flexibility allows for optimal placement depending on the specific imaging requirements. The sample stage may also be configured to rotate and translate the sample to enable tomographic imaging.

The X-ray microscopy system may include an X-ray detection system. The X-ray detection system may be positioned to receive the X-ray beam after it has been modulated by both the spatial beam modulator and the sample.

The X-ray detection system includes a spatially resolved detector with a pixel size sufficient to capture shifts in the speckle pattern caused by refraction of the X-rays as they pass through the spatial beam modulator and the sample. Specifically, the detector may have an effective pixel size of less than 5 micrometers, and preferably less than 300 nanometers, to ensure adequate resolution for detecting speckle pattern shifts.

In an embodiment, the detection system may further include a thin scintillator configured to convert X-rays into light, providing high resolution for low-energy X-rays and an optical system, including an objective lens and a tube lens, that is configured to collect and focus the light from the scintillator onto the spatially resolved detector.

In an embodiment, the X-ray detection system may include direct conversion spatially resolved X-ray detectors.

In an embodiment, the system may be configured such that the source-to-detector distance is less than 100 centimeters and preferably less than 60 centimeters. This compact configuration reduces X-ray flux loss, improves system throughput, and enables high-resolution imaging without the need for large, bulky equipment.

Another aspect of the disclosure relates to a method for simultaneous X-ray phase contrast and dark-field imaging of a sample. The method includes the steps: generating an at least partially coherent X-ray beam using a laboratory X-ray source with a focal spot size of less than 5 micrometers, passing the X-ray beam through a spatial beam modulator, such as a random phase object or a grating, to generate a speckle pattern in the field of view, positioning a sample in the beam, either before or after the spatial beam modulator, detecting the X-ray beam after it has passed through the sample using an X-ray detection system including a spatially resolved detector with a pixel size sufficient to capture shifts and contrast degradation in the speckle pattern, obtaining a reference speckle image without the sample and a sample speckle image with the sample in the field of view, registering the reference and sample speckle images to align the speckle patterns accurately, tracking shifts in the speckle patterns between the reference and sample images to determine phase gradients, e.g., by using correlation-based methods or distance-based methods, integrating the phase gradients to produce a phase image of the sample and analyzing contrast changes in the speckle patterns to determine a dark-field signal. Integration may involve using Fourier methods or variational methods to compute the integrated phase, repeating the steps of obtaining speckle images while rotating and/or translating the sample to collect data from multiple angles, and reconstructing a three-dimensional tomographic image of the sample using the collected data.

The method ensures that the source-to-detector distance remains less than 100 centimeters, to maintain system compactness and efficiency, and can even be less than 60 centimeters.

By analyzing the shifts and contrast changes in the speckle patterns, the system computes phase gradients and dark-field signals, producing detailed phase images that enhance contrast in low-atomic-number materials like soft tissues and polymers. This makes the system particularly powerful for studying such samples at high resolution, providing insights into materials science, biological structures, and other applications requiring non-destructive, three-dimensional analysis.

The compact design of the system reduces source-to-detector distance, improving flux efficiency and system throughput while enabling high-resolution, three-dimensional tomographic imaging. The use of a laboratory X-ray source with a small focal spot size and low-energy X-rays enhances the spatial coherence of the beam, which is critical for generating high-contrast speckle patterns and detecting small refraction and scattering signals from the sample.

In summary, the present disclosure relates to an X-ray microscopy system and method that provide simultaneous phase contrast and dark-field imaging in a compact configuration. The system's components and the method's steps are designed to work synergistically to achieve high-resolution imaging with improved contrast for low-attenuation, low-atomic-number materials, all while maintaining efficiency and reducing the overall size of the equipment required.

In an embodiment, the X-ray source is a laboratory X-ray source with a focal spot size of less than 5 micrometers ($\mu$m), and can be less than 3 micrometers to ensure spatial coherence.

The above and other features of the embodiments of the disclosure including various novel details of construction and combinations of parts, and other advantages, will now be more particularly described with reference to the accompanying drawings and pointed out in the claims. It will be understood that the particular method and device are shown by way of illustration and not as a limitation of the invention. The principles and features of this disclosure may be employed in various and numerous embodiments.

BRIEF DESCRIPTION OF THE DRAWINGS

In the accompanying drawings, reference characters refer to the same parts throughout the different views. The drawings are not necessarily to scale; emphasis has instead been placed upon illustrating the principles.

Fig. 1A, 1B, and 1C are schematic diagrams illustrating the contrast mechanisms for absorption, phase, and ultra-small angle X-ray scattering; according to an embodiment.

Fig. 2 is a schematic diagram of an X-ray microscope according to an embodiment.

Fig. 3 is schematic diagram of a two stage X-ray detection system used in the microscope according to a preferred embodiment;

Fig. 4A and 4B are flow diagrams showing imaging methods according to an embodiment;

Fig. 5A is an example contrast image of the sample (PMMA sphere glued to a carbon fiber stick);

Fig. 5B is an example contrast image with a spatial beam modulator in the imaging path showing speckle patterns;

Fig. 5C shows histogram plots of the absorption values of three types of signals for the three materials associated with the images (air, PMMA, and carbon fiber); Fig. 5D shows phase and darkfield plots for the three materials.

Fig. 5E shows two example images of the sample showing the directional darkfield signal alone in both horizontal and vertical axes;

Fig. 5F shows a clean phase integral from the phase gradients;

Figs. 5G and 5H show the estimated dark field and transmission signals, respectively.

DETAILED DESCRIPTION OF THE DRAWINGS

The disclosure now will be described more fully hereinafter with reference to the accompanying drawings, in which illustrative embodiments are shown. It may, however, be embodied in many different forms and should not be construed as limited to the embodiments set forth herein; rather, these embodiments are provided so that this disclosure will be thorough and complete.

As used herein, the term "and/or" includes any and all combinations of one or more of the associated listed items. Also, all conjunctions used are to be understood in the most inclusive sense possible. Thus, the word "or" should be understood as having the definition of a logical "or" rather than that of a logical "exclusive or" unless the context clearly necessitates otherwise. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

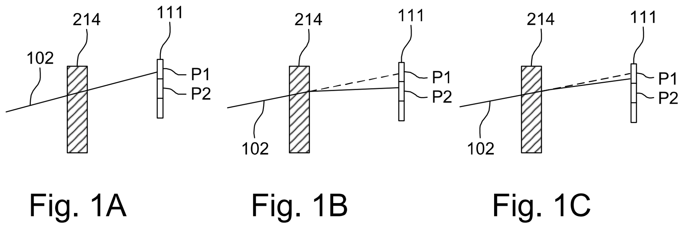

Figs. 1A, 1B, and 1C respectively illustrate three X-ray-matter interaction phenomena between an X-ray beam 102 and a sample 214, i.e.: absorption, phase shifting (refraction), and ultra-small angle X-ray scattering.

Fig. 1A illustrates the absorption phenomena. While the travel direction stays the same, the intensity of the X-rays 102 is reduced by the sample 214 (through attenuation). Fig. 1B shows the refraction phenomena. Due to a phase change of the X-ray beam 102 in the sample 214 (i.e. due to different refractive indices), the X-ray beam 102 is bent by the sample and can be detected by a pixelated, spatially resolved array detector (such as a camera sensor) 111. This usually results in shifts of features in the captured image. As illustrated, the X-rays 102 are bent enough such that they fall on an adjacent or adjoining pixel (P2) of the camera 111, whilst the attenuated part is imaged at P1. Fig. 1C, on the other hand, describes how ultra-small angle X-ray scattering (USAXS) (also known as the dark-field signal (Pfeiffer, Franz, et al. "Hard-X-ray dark-field imaging using a grating interferometer." Nature Materials 7.2 (2008): 134-137 (Pfeiffer 2008)) works. USAXS are scattering events caused by sub-resolution features that bend the X-ray 102 in a series of small angles that sum together to degrade the contrast of images, and can be extracted by analyzing the "blurring" of the feature. As illustrated, the X-rays 102 are only bent slightly such that they may fall on the same pixel P1 of the detector 111.

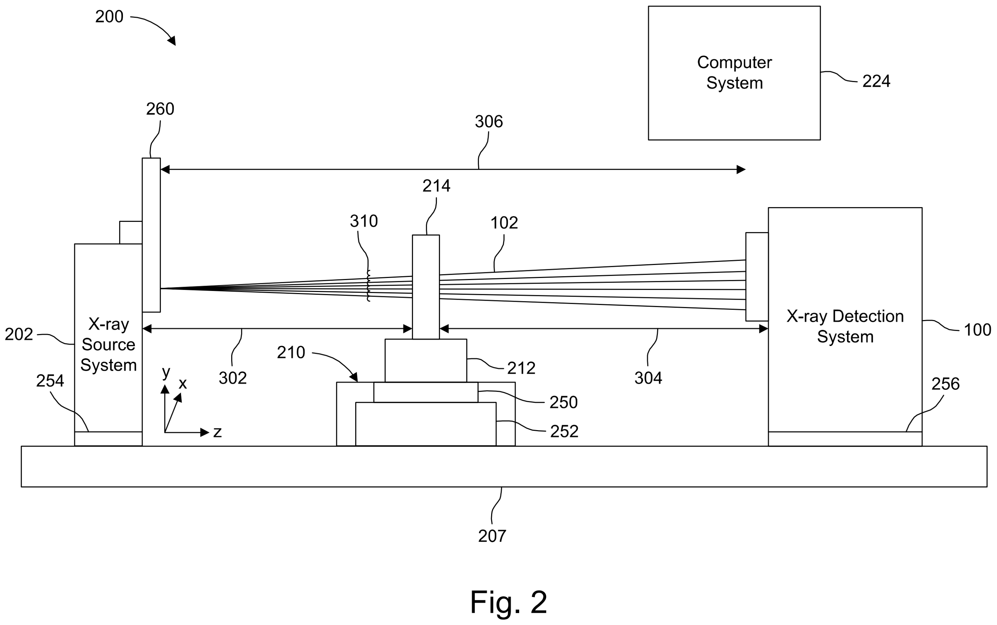

Fig. 2 is a schematic diagram of an X-ray CT microscopy system 200 according to an embodiment.

The X-ray microscopy system 200 preferably includes an X-ray imaging system that has an X-ray source system 202 that generates an at least partially coherent X-ray beam 102 and a sample stage system 210 with sample holder 212 for holding an object or sample 214 and positioning it to enable scanning of the sample 214 in the stationary X-ray beam 102. "At least partially coherent" for the purposes of this application refers to the X-ray beam 102 exhibiting some degree of temporal and/or spatial coherence, but not necessarily full coherence. In other words; the beam 102 exhibits at least some amount of regularity and/or predictability of the phases of its waveforms, both in time and/or space. Otherwise put; the beam 102 can have some divergence. An X-ray detection system 100 detects the X-ray beam 102 after it has been modulated by the sample 214, if (while) there is a sample 214 present. Otherwise (else), the detection system 100 detects the beam 102 with no beam modulation by the sample 214. A base 207 such as a platform or optics table provides a stable foundation for the microscope 200.

In an embodiment, the sample stage system 210 has the ability to position and rotate the sample 214 in the beam 102. Thus, the sample stage system 210 preferably includes a precision 3-axis stage 250 that translates and positions the sample along the x, y, and z axes, very precisely but over relatively small ranges of travel. This allows a region of interest of the sample 214 to be located within the beam 102. The 3-stage stage 250 is mounted on a theta stage 252 that rotates the sample 214 in the beam around the y-axis. The theta stage 252 is in turn mounted on the base 207.

The X-ray beam 102 generated by the source 202 is preferably conditioned to suppress unwanted energies or wavelengths of radiation to improve beam coherence. For example, undesired wavelengths present in the beam 102 are eliminated or attenuated, using, for instance, energy filters (designed to select a desired X-ray wavelength range (bandwidth)) held in a filter wheel 260.

When (while) the sample 214 is exposed to the X-ray beam 102, the X-ray photons transmitted through the sample 214 form a modulated X-ray beam 102 that is then received by the X-ray detection system 100.

Typically (with a cone beam X-ray), a magnified projection image of the sample 214 is formed on the X-ray detection system 100. The geometrical magnification is equal to the inverse ratio of the source-to-sample distance 302 and the sample-to-detector distance 304.

In an embodiment, the X-ray source system 202 and the X-ray detection system 100 are mounted on respective z-axis stages. For example, in the illustrated example of Figure 2, the X-ray source system 202 is mounted to the base 207 via a source stage 254, and the X-ray detection system 100 is mounted to the base 207 via a detector stage 256. In practice, the source stage 254 and the detector stage 256 are lower precision, high travel range stages that allow the X-ray source system 202 and X-ray detection system 100 to be moved into position and also to adjust the source-to-sample 302 and/or sample-to-detector distance 304.

The operation of the X-ray CT microscopy system 200 and the scanning of the sample 214 is preferably controlled by a computer system 224 configured to process the images or projections and then perform tomographic reconstruction. As such, the computer system 224 preferably includes an image processor subsystem (not pictured), a controller subsystem (not pictured). The computer system 224, with the possible assistance of its image processor subsystem, accepts the set of images from the detection system 100 associated with each rotation angle of the sample 214 to build up a scan. The image processor subsystem combines the projection images using a CT reconstruction algorithm to create 3D tomographic volume information for the sample 214. In an embodiment, the reconstruction algorithm can be analytical, where convolution or frequency domain filtering of the projection data is combined with back projection onto a reconstruction grid. Alternatively, it can be iterative, where techniques from numerical linear algebra or optimization theory are used to solve a discretized version of the projection process, which may include modeling of the physical properties of the imaging system.

The present disclosure employs a combination of components: 1) a sufficiently spatially coherent X-ray source 202, 2) a spatial beam modulator 310 located in the beam 102 between the source 202 and the X-ray detection system 100, and 3) a spatially resolved detector as part of the X-ray detection system 100 (not shown). This spatially resolved detector preferably has a sufficiently small detector pixel size for capturing the X-ray speckle pattern and specifically a shift in this speckle pattern caused by refraction of the X-rays as they pass through the spatial beam modulator 310 and the sample 214. Specifically, the detector has an effective pixel size of less than 5 micrometers, and preferably less than 300 nanometers, to ensure adequate resolution for detecting speckle pattern shifts.

The X-ray source 202 is a micro focused laboratory X-ray source. As used herein, a laboratory X-ray source is any suitable source of X-rays that is not a synchrotron X-ray radiation source. In an embodiment, laboratory X-ray source 202 can be an X-ray tube, in which electrons are accelerated in a vacuum by an electric field and shot into a target piece of metal, with X-rays being emitted as the electrons decelerate in the metal. Typically, such sources produce a continuous spectrum of background X-rays combined with sharp peaks in intensity at certain energies that derive from the characteristic lines of the selected target, depending on the type of metal target used.

In one example, the X-ray source 202 is a micro focused source, with a tungsten target. In other embodiments, targets that include molybdenum, gold, platinum, silver or copper also can be employed. Preferably a transmission-type target configuration is used in which the electron beam strikes the thin target from its backside. The X-rays emitted from the other side of the target are used as the beam 102. That said, reflective-type target configurations are used in other embodiments.

To provide adequate coherence, the X-ray source 202 has a focal spot size of about 5 micrometers ($\mu$m) or less, and preferably less than 3 $\mu$m, such as 2.2 $\mu$m, or even smaller. In other words; the laboratory X-ray source 202 is a laboratory X-ray source with a focal spot size of less than 3 micrometers. Advantageously, by having a small focal spot, the X-ray source 202 can generate high-brilliance X-rays with good signal-to-noise ratio in a reasonable exposure time, improving the system performance during imaging.

The selected energy should be relatively low as these energies will exhibit a larger phase signal. In an embodiment, the energy is lower than 50 keV and preferably lower than 20 keV.

The coherence of the beam 102 assists the generation of a high contrast random granular speckle pattern in the X-ray detection system 100, but also enhances the sensitivity of detecting small refraction and scattering signal.

The spatial beam modulator 310 can take several different forms. In an embodiment, the spatial beam modulator is a random phase object or grating. Possible gratings include one dimensional, two dimensional and circular gratings.

In other embodiments, the random phase object can either be a quasi or pseudo random object or a random object. One example of a preferred random phase object is a piece of silicon carbide (SiC) sandpaper. In addition, other materials instead of SiC sandpaper can be used such as other low atomic number materials such as aluminum and silicon, which have stronger phase perturbation and less intensity perturbation capability, to contribute to the generation of higher contrast.

SiC is nearly an optimal material for making a phase modulator mask, and depositing SiC to make (sand)paper is a very mature technology. Due to presence of semi-monolayer round spherical micro-objects (i.e., grit adhered to paper for form the sandpaper), the aspect ratio (height to width) is not high, resulting in lower contrast modulation patterns. One way of improving pattern contrast is to use coarser grit sandpapers, though at the cost of grain size. Stacking multiple sandpaper pieces together has also been considered, resulting in higher contrast (e.g., a stack of two pieces of sandpaper is usually 20% higher contrast than single one), though at cost of flux as those abrasive papers are not pure phase objects and have substrates that result in a ~20% flux decrease.

In addition, there are also a few candidates that have been proposed as potentially better phase masks than abrasives/sandpaper, such as using metal-assisted chemical etching (MACE) process and nanowires (Romano L., et al., Microfabrication of X-ray Optics by Metal Assisted Chemical Etching: A Review, Micromachines, 11, 589; (2020): 1-23, doi:10.3390/mi11060589 (Romano2020)). Indeed, results from MACE patterns have been demonstrated that can generate finer structures and appropriate for X-ray phase imaging (Zdora, Marie-Christine, X-ray Phase-Contrast Imaging Using Near-Field Speckles, Doctoral Thesis accepted by University College London, London, United Kingdom, Chapter 9.2, doi.org/10.1007/978-3-030-66329-2, (2020): 259-273. These patterns can be actual random patterns or quasi or pseudo random. Generally, however, MACE patterns produce lower structure contrast, even with coherent radiation in synchrotron facilities. The nanowire option is expected to produce similar results (higher resolution, much lower contrast).

In one embodiment, the spatial beam modulator 310 is sandpaper (1000grit) made with SiC on a lightweighted tube (3D printed with nylon) that is threaded to the filter wheel 260.

In an alternative embodiment, the spatial beam modulator 310 can also be placed after the sample, with no expected variation in performance. In other words; whether the modulator 310 is placed between the X-ray source system 202 and the sample 214 or between the sample 214 and the X-ray detection system 100 has no significant bearing on the performance of the claimed solution.

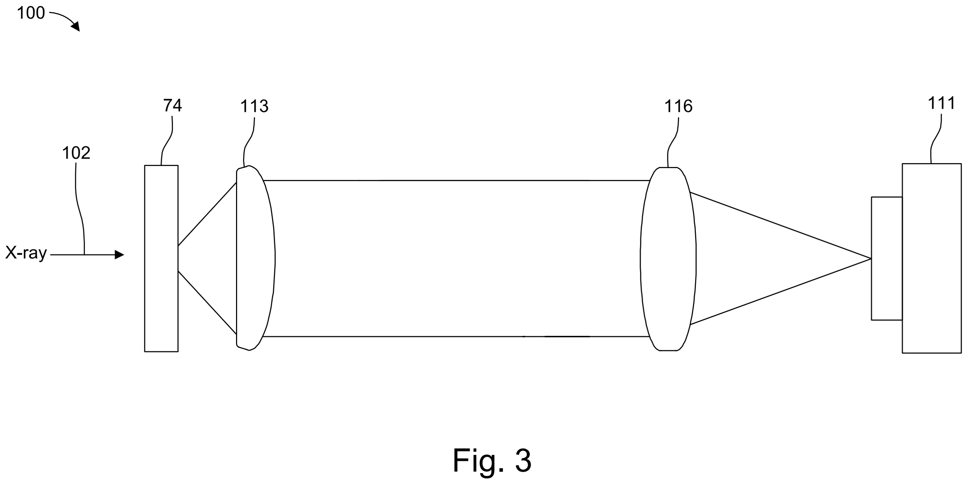

Fig. 3 shows one embodiment with a two stage configuration of the detector 100. Here, incoming X-rays 102 are received in a scintillator 74, which converts the X-rays into light, often visible light. In other words; the scintillator 74 receives X-ray radiation and emits light at another (e.g., visible) wavelength. The light is collected by an objective lens 113. An image is then formed on a spatially resolved detector 111 (e.g., camera image sensor) by a tube lens 116. In other words; as seen in Figure 3, the light is focused by the objective lens 113 onto the tube lens 116 and further focused by the tube lens 116 onto the spatially resolved detector 111. This optical stage often provides optical magnification, that is greater than 1x (one times) magnification and often greater than 1.5x (one-and-a-half times) magnification. In an embodiment, 2x (two times) magnification or more is provided such as 4x (four times) magnification or more. In addition, the scintillator 74 should be thin enough to ensure best achievable resolution to the low energy X-rays. In other words; the scintillator 74 is thin to provide high resolution to low energy X-rays. The thin scintillator is enough to stop most of the low energy X-rays, and the thin scintillator will therefore give better resolution. For example, for an exemplary 4x (four times) objective, the depth of focus is 10 $\mu$m. On the other hand, for a 20x (twenty times) objective, the depth of focus is smaller. Therefore, in an embodiment, a scintillator of less than 10 $\mu$m preferably provides a good tradeoff for many use cases.

The detector 111 preferably is an image sensor having a two dimensional array of at least 1000 by 1000 pixels and preferably has less than 5 $\mu$m effective pixel size such as a 3.38 $\mu$m effective pixel size or less in each dimension. In some examples, the effective pixel size on the detector 111 is less than 300 nm. This is close to the diffraction limit of the visible light wavelengths produced by the scintillator 74. Effective pixel size refers to the actual pixel size of the detector scaled by the magnification of the optical stage, thus representing the pixel size at the scintillator 74. So, for example, for an optical stage providing 4x (four times) magnification, a 5 $\mu$m effective pixel size at the scintillator 74 corresponds to a 20 $\mu$m actual pixel size on the detector 111.

While the current embodiment employs a two stage detector configuration, other detectors and detector technologies can be used. For example, a direct detector is a possible alternative, provided it has sufficient resolution. For example, the high resolution light valve detector of U.S. Pat. No. 12,130,392, by Xu and vom Hagen, could be used, especially when imaging physically large samples.

This setup enables a relatively compact system in which the source-detector distance 306 is less than less than 1 meter (m) (i.e., 100 centimeter (cm)), such as about 60 cm or less, or even 30 cm, or less. In an embodiment, 24 cm has been demonstrated. Thus, preferably, a range between 15 cm and 60 cm is optimal.

In the present system, there is a relationship between the source spot size and the pixel size of the detector. According to the van Cittert-Zernike theorem, the spatial coherence area $A_c$ is given by

$$A_c = \frac{D^2\lambda^2}{\pi d^2}$$

where $D$ is the distance away, and $d$ is the spot diameter. This area at the sample plane suggests the area within which waves will coherently interfere with each other on-average, and this can be used as a design guidance of the selection of detector resolution (at sample plane) to detect the phase signal with good sensitivity. For a typical 15 cm source to sample distance, with a 2 $\mu$m source spot at 20 keV, this gives about $2.5 \times 2.5\ \mu m^2$ coherence area. Ideally, we want to limit the processing window (when we do the feature matching for detecting shifts) to not be significantly bigger than this area. This coherence area matches well with a two stage detector providing 4x (four times) magnification placed at 15 cm away from the sample (1.68 $\mu$m resolution at sample plane). With 3 pixels (5.04 $\mu$m effective pixel size), the local features (introduced by the spatial beam modulator) are well captured, while still maintaining good sensitivity detecting the shifts. Using a higher resolution detector can in principle reduce this coherence limit (i.e., have either larger spot, or place the source closer), if the feature size of the spatial beam modulator can be reduced to be as small as the reduced coherence area.

According to the transport of intensity theory, the displacement in direction x is to first order approxi-

mately

$$\delta_x = (z/k)\,\frac{\partial\phi}{\partial x},$$

where $k = \frac{2\pi}{\lambda}$ is the wavenumber. $\phi$ is defined in eq1. It is preferred that this displacement is larger than a fraction of pixel size at the detector plane, such that the phase gradient $\frac{\partial\phi}{\partial x}$ can be detected.

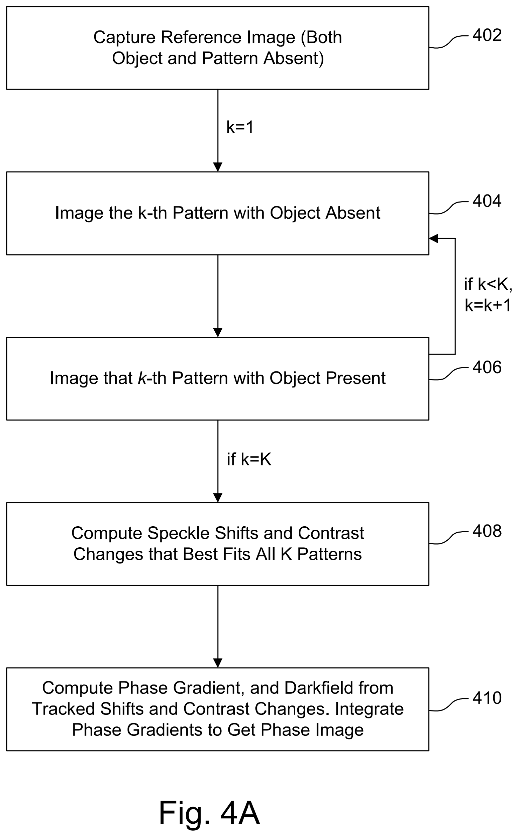

Fig. 4A is a flow diagram illustrating the dark field imaging method according to an embodiment. Preferably, this method is executed automatically by the control of the X-ray CT microscopy system 200 by the computer system 224. In an embodiment, to ensure the best phase and darkfield retrieval quality, images are taken of multiple patterns, with the sample 214 present in the X-ray 102 and with the sample 214 absent.

First, in step 402, a reference image is captured with both the object of interest or sample 214 and the spatial beam modulator 310 removed from the X-ray beam 102. The reference images of free space (air) are used to correct potential non-uniformity in the intensity across the field, for all later measurements.

In step 404, the spatial beam modulator 310 is added into the path of the X-ray beam 102 and the speckle pattern is detected by capturing a speckle pattern image.

In step 406, the spatial beam modulator 310 and object of interest or sample 214 are added into the path of the X-ray beam 102 and the speckle pattern is detected (speckle-pattern-with-sample image). This can be done by locking the spatial beam modulator 310 in the beam path and moving the object in and out of the field of view of the system 200 so that the shifts in the speckle pattern caused by the presence of the sample 214 can be tracked and detected.

This process is repeated K times, where K is the number of patterns, in which each iteration moves to the k+1 pattern. Preferably, K is greater than 10 and often greater than 20 or 25. K is further preferably between 50 and 60 and is usually less than 80.

In general, larger values for K yield better resolution, but the performance will plateau eventually. In an embodiment, a guiding rule is choosing K such that the average speckle size divided by the square root of K is the desired resolution; wherein the square root comes from the fact that we track the shift in two dimensions.

In step 408, the shifts in the speckle patterns and the contrast changes are computed for all K patterns from the captured images by the computer system 224.

Because of the refraction of X-rays caused by the sample 214, the speckle patterns shift. Moreover, because of the combination of the X-ray energy, coherence of the source, and the detector resolution, these shifts are detected thereby providing information on the phase gradient.

The shifts in the speckle patterns are in one embodiment computed using fast-Fourier transform methods by the computer system 224. Such methods are widely used for rapid registering of large-sized images, the primary goal here is to register a large number of patches of speckles.

There are a few ways for tracking the shift of speckles from reference images (sample absent) and sample images (sample present) by the computer system 224. The two general ways being distance based (note that distance here refers to mathematical concept, in context of functional space), and correlation based.

The distance-based methods aim to find the shifts, absorption, and darkfield signal that minimize the distance between speckles.

The correlation-based methods, on the other hand, usually compute the similarity of the two patterns with a normalized cross correlation. Therefore, the normalized cross-correlation in the native space domain is implemented. It should leverage the existing highly optimized operations in modern deep learning libraries. Specifically, the average pool operation is preferably used to compute the mean of the shifts of all of the small patches on a large image.

With reference and sample images registered, the shifts in horizontal and vertical directions are proportional to the phase gradient in those directions, respectively.

Then in step 410, the phase gradient and darkfield image (for each pixel) are computed from tracked shifts and contrast changes, respectively, by the computer system 224. Preferably, the phase gradient is integrated by the computer system 224 to produce a final image of the phase. The integration result is highly sensitive to noise, and discontinuity. To compute a proper integrated phase, methods from the normal integral computer vision problem (Quéau, Yvain, Jean-Denis Durou, and Jean-Frangois Aujol. "Normal integration: a survey." Journal of Mathematical Imaging and Vision 60 (4) (2018): 576-593 (Quéau 2018)) are employed in the programming of the computer system 224, in one embodiment.

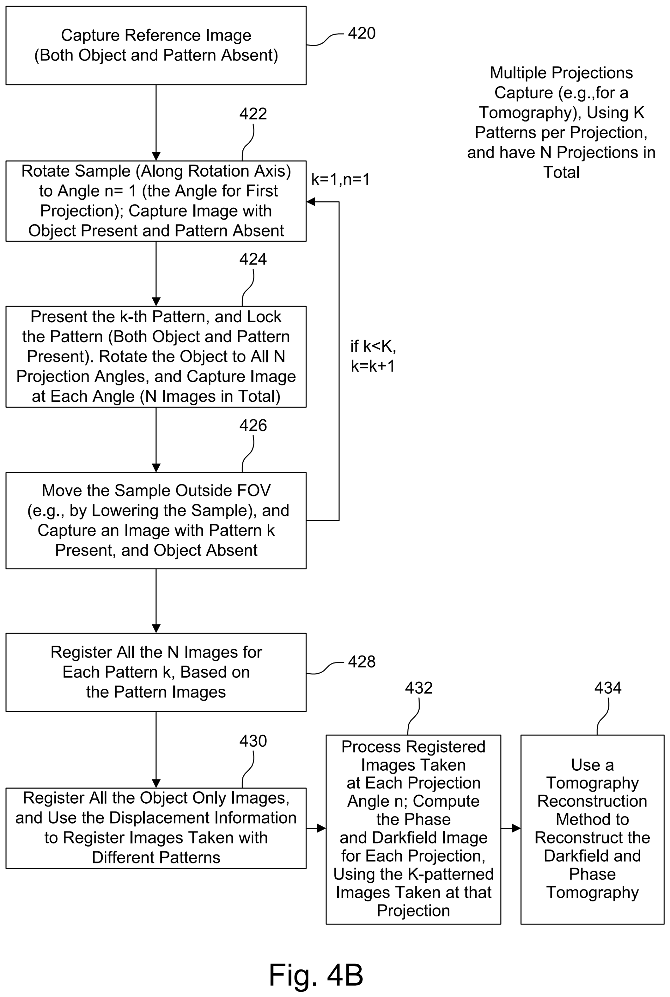

Fig. 4B is a flow diagram illustrating the dark field imaging method according to one aspect of the present disclosure for tomography. Preferably, to ensure the best phase and darkfield retrieval quality, images are taken of multiple patterns, with the sample 214 present and the sample 214 absent. Preferably, this method is executed automatically by the control of the X-ray CT microscopy system 200 by the computer system 224.

First, in step 420, a reference image is captured with both the object of interest or sample 214 and the spatial beam modulator 310 removed from the X-ray beam 102. The reference images of free space (air) are used to correct potential non-uniform intensity across the field, for all later measurements.

Then in steps 422, 424, and 426, images are taken at different angles for projection, e.g., n = 1, 2, ...with n standing for different angles.

In an embodiment of the method, for k = 1, 2, 3.., K images for K different patterns are captured with the sample 214 absent and KN images for all patterns with the sample 214 present at N different angles are captured. In addition, potential drifts caused by thermal or mechanical instability must be considered. For example, it is also beneficial to capture additional images of sample only (pattern absent). Finally, a sequence of images must be captured in which drifts can be estimated.

In more detail, with the pattern absent (i.e., spatial beam modulator 310 removed from the X-ray beam 102), the sample 214 is moved inside FOV in step 422. At the first projection angle, an image is captured, referred as $prop^{k=1,n=1}$ (propagation phase image).

Then, in step 424, the pattern k=1 is provided by moving the spatial beam modulator 310 into the X-ray beam 102. In addition, the sample is rotated to angles: n=1, 2, ... N in sequence, and images $proj^{k=1,n=1,2,...N}$ are taken (with both pattern k and sample-at-angle-n present).

Then, in step 426, the sample 214 is moved outside of the FOV to take an image of the $k^{th}$ pattern.

Next, the process returns to step 422 in which the sample 214 is moved back into FOV, and rotated back to angle 1. In addition, the pattern is moved out and another image is captured with the sample 214 only; this image is referred to as $prop^{k=2}$. Now we move on to next pattern k=2, lock the pattern, and continue to rotate and image to n=1, 2, ... N and take images.

The loop is repeated until all images are taken for the last pattern k=K.

In step 428, the thermal and mechanical sample drifts are estimated by the computer system 224. All images are aligned together, i.e., starting with aligning all the propagation phase images $prop^{1,n=1}$, $prop^{2,n=1}$,... $prop^{K,n=1}$, as all these images are supposed to be the same.

It is assumed the sample 214 is fully inside the FOV, therefore, the intensity in the corner (where only air is imaged) is used to normalize the intensity of the images taken nearby (in time). This addresses any flicker in the source power. It is very likely the next image taken after $prop^{k=1,n=1}$, $proj^{k,n=1}$, is at exactly the same place, since the sample 214 has not been moved. Hence, it is reasonable to assume those two images are aligned, and the rest of the projections $proj^{k,n=2}$, $proj^{k,n=3}$, etc., are registered with this $proj^{k,n=1}$, using the patterned structure outside the sample 214 region.

In step 430, all the sample-only images are registered by the computer system 224. The displacement information is used to register images taken with different patterns.

Once all the images are aligned, all the K images for viewing the sample 214 at angle n are processed in step 432 by the computer system 224. The phase and darkfield signal are extracted at angle n.

Then, this is done for all the n = 1, 2, ... N, images. The phase and darkfield tomography is reconstructed from those n darkfield and phase images in step 434 by the computer system 224.

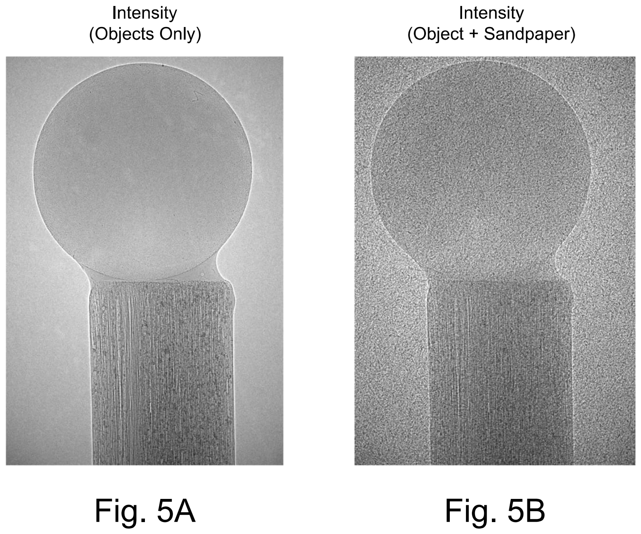

Figs. 5A-5H show different images and the statistics of those images of a sample made with a PMMA, i.e., poly(methyl methacrylate) sphere glued to a carbon fiber.

Fig. 5A is a contrast image of the sample 214; and Fig. 5B is a contrast image with the spatial beam modulator 310 (i.e., SiC sandpaper) in the imaging path.

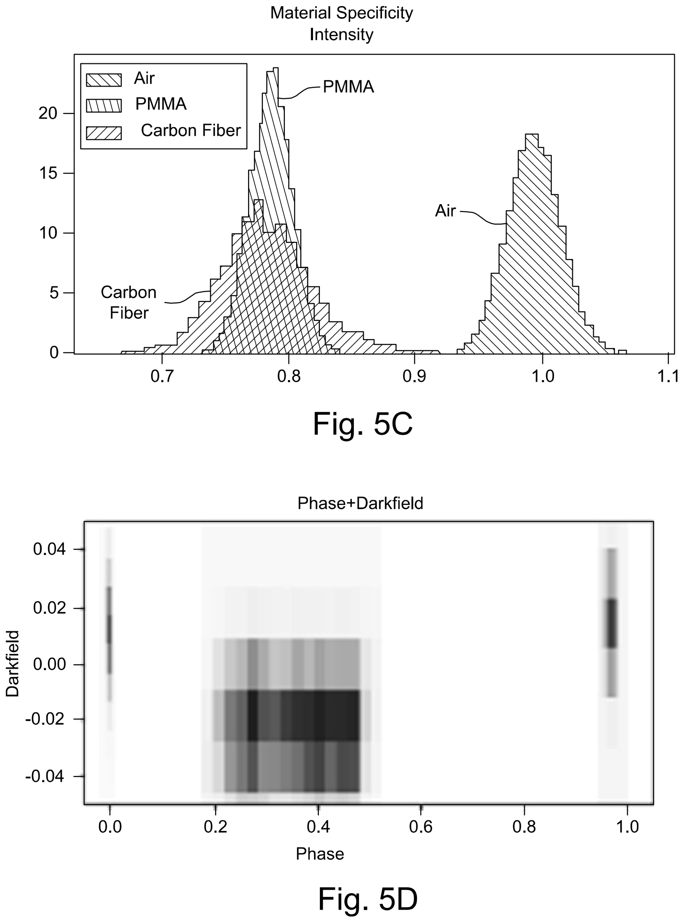

Figs. 5C and 5D show histogram plots of the values of three types of signals: absorption (plot in Fig. 5C) and phase and darkfield (plot in Fig. 5D) for the three materials associated with the images (air, PMMA, and carbon fiber).

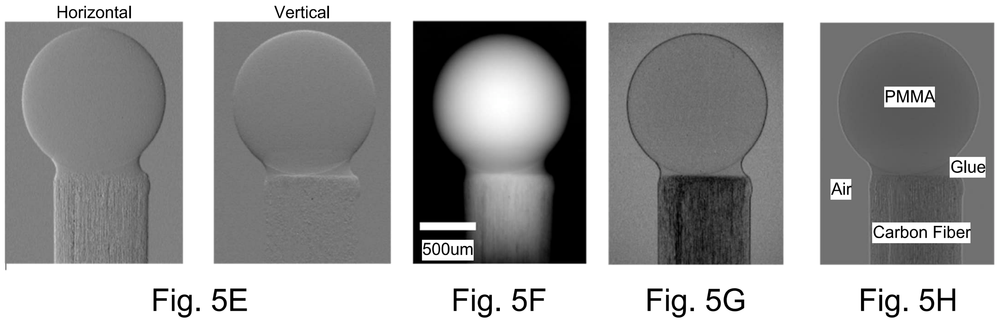

Fig. 5E shows two images of the sample 214 showing the directional darkfield signal alone in both horizontal and vertical axes.

Fig. 5F shows a clean phase integral from the phase gradients (also called differential phase contrast in literature) displayed in Fig. 5E. From the images, we can see the surface structure of the PMMA sphere. The phase integration is achieved by a Fourier method (Frankot, Robert T., and Rama Chellappa. "A method for enforcing integrability in shape from shading algorithms." IEEE Transactions on pattern analysis and machine intelligence 10.4 (1988): 439-451 (Frankot 1988)), where a homogeneous Dirichlet boundary condition is used. However, other phase integration methods can also be used, such as the Horn and Brooks method (Horn, Berthold KP, and Michael J. Brooks. "The variational approach to shape from shading." Computer Vision, Graphics, and Image Processing 33.2 (1986): 174-208 (Horn 1986)).

With the registered speckle patches, the dark field and transmission signal can be estimated as shown in Figs. 5G and 5H. Assuming N patterns are used, at each spatial position on the images, we have N values for the reference, denoted as $\mathbf{x} \in R^N$, and N values for the sample, $\mathbf{y} \in R^N$.

There are ways to estimate the dark field and transmission. The first one is contrast-based. The intuition behind it is that the impact of many sub-resolution features refracting the X-rays through regions of high lateral phase gradient will sum to an effective blur of local features (USAXS). Hence, the contrast of speckles gives a qualitative estimation of how strong the USAXSs are, and the USAXS v and transmission signal $T$ can be computed as:

$$T = \frac{\mathbb{E}(\mathbf{y})}{\mathbb{E}(\mathbf{x})}$$

and

$$\nu = \frac{std(\mathbf{y})}{std(\mathbf{x}) * T}$$

$\mathbb{E}(\cdot)$ computes the mean, and $std(\cdot)$ computes the standard deviation. Again, to leverage highly optimized operations in modern deep learning libraries, instead of computing the standard deviation directly, we use the equation $\mathbb{E}\left(\left(\mathbf{x} - \mathbb{E}(\mathbf{x})\right)^2\right) = \mathbb{E}(\mathbf{x}^2) - \mathbb{E}(\mathbf{x})^2$, which translates the calculation of $std(\cdot)$ of patches to a series of $\mathbb{E}(\cdot)$ operations on patches that can be implemented efficiently. Besides the contrast-based method, the second, more quantitative method, is based on a physics model. We denote $\alpha \in R^N$ as the spatial average (with a predefined sized window) of the reference image around the pixel **x**. The sample and reference image's pixel values are related with

$$\mathbf{y} = \beta\boldsymbol{\alpha} + \kappa\mathbf{x},$$

where $\beta = T(1 - v)$, $k = Tv$. Again $v$ is the USAXS signal, and $T$ is the transmission signal. This can be written into a matrix vector multiplication

$$[\boldsymbol{\alpha}, \mathbf{x}] \begin{bmatrix} \beta \\ \kappa \end{bmatrix} = \mathbf{y}$$

If we denote matrix $\mathbf{W} = [\alpha, \mathbf{x}] \in R^{N \times 2}$, $\beta$ and $\kappa$ can be easily computed as

$$\begin{bmatrix} \beta \\ \kappa \end{bmatrix} = (\mathbf{W}^T\mathbf{W})^{-1}\mathbf{W}^T\mathbf{y}$$

Note that we have different **W** for each individual pixels, but again this can be very efficiently implemented in modern deep learning libraries, which is highly optimized for computing matrix multiplications in parallel.

Fig. 5G shows a measurement and derived signal for a sample 214 made with a PMMA sphere glued onto a carbon fiber. Darkfield image is extracted by the more quantitative model-based method. The combination of darkfield and phase signal gives more specificity in terms of separating air, PMMA, and carbon fiber.

Directional darkfield imaging:

As mentioned above, phenomenon-wise, the USAXS blurs out the image, and causes the intensity of corresponding pixels to decay. By modelling this blur as a Gaussian blur, and estimating the anisotropic covariance of this Gaussian, one embodiment can derive the directional darkfield signal alone in both horizontal and vertical axes. By computing the angle between vertical and horizontal signal for each pixel, an orientation map can be generated (Smith, Ronan, et al. "X-ray directional dark-field imaging using Unified Modulated Pattern Analysis." PLOS One 17.8 (2022): e0273315).

Note that similar to the Beer-Lambert law that is widely used in modelling the absorption projection, which says the log of intensity decay can be approximated as a linear sum of the attenuation, the definition of phase is also a linear sum of the refractive index change along the path (see Eq. 1). Therefore, standard reconstruction algorithm for parallel (Zdora, Marie-Christine, et al. "X-ray phase tomography with near-field speckles for three-dimensional virtual histology." Optica 7.9 (2020): 1221-1227) and cone beam (Hagen, C.K., et al. "Low-dose phase contrast tomography with conventional X-rayX-ray sources." Medical Physics Letter 41.7 (2014): 070701-1-070701-5) CT can be used. Moreover, dark-field tomography can also be achieved (Doherty, Adam, et al., "Edge-Illumination X-Ray Dark-Field Tomography." American Physical Society 19 (2023): 054042-1-054042-8). Similar to the attenuation signal, the darkfield signal is modelled as the multiplication of all the darkfield perturbation along the path (Doherty et al., 2023), (Bech, M., et al., "Quantitative X-ray dark-field computed tomography. " Phys. Med. Biol. 55 (2010): 5529-5539)), therefore, the log of the total signal can also be written as the sum of all the contributing signal along the path.

Applications:

As demonstrated by Figs. 5A-5H, and also in general, the phase signal gives better contrast for low-atomic-number materials. Combined with darkfield signal, this technique gives better specificity for identifying material. As shown in Fig. 5C, while carbon fiber and PMMA cannot be distinguished very well with absorption signal alone, they can be well separated by the phase and darkfield signals.

The claimed solution can be used for high resolution inspection of soft tissue, such as micro-model organisms (e.g., zebrafish, fruitfly), and organs of small-model animals (e.g., kidney of mouse). In addition, examination of small defects in parts made with composite materials (e.g. for additive manufacturing. i.e., nylon/carbon fiber/polymer resin 3Dprinting) is also a natural application.

While this disclosure has been particularly shown and described with references to preferred embodiments thereof, it will be understood by those skilled in the art that various changes in form and details may be made therein.

**List of reference signs**

74      Scintillator
100     Detector
102     X-ray beam

| 111 | Detector |
|---|---|
| 113 | Objective lens |
| 116 | Tube lens |
| 200 | X-ray microscopy system |
| 202 | X-ray source system |
| 207 | Base |
| 210 | Sample stage system |
| 212 | Sample holder |
| 214 | Sample |
| 224 | Computer system |
| 250 | Precision 3-axis stage |
| 252 | Theta stage |
| 254 | Source stage |
| 256 | Detector stage |
| 260 | Filter wheel |
| 302 | Source-to-sample distance |
| 304 | Sample-to-detector distance |
| 306 | Source-detector distance |
| 310 | Spatial beam modulator |

**Claims**

1. An X-ray microscopy system (200) for phase contrast and dark-field imaging, the system (200) comprising:

   a laboratory X-ray source system (202) configured to emit an at least partially coherent X-ray beam (102);
   a spatial beam modulator (310) positioned in a path of the X-ray beam (102);
   a sample stage (250) configured to hold and position a sample (214) within the X-ray beam (102) before the beam (102) passes through the spatial beam modulator (310) or after the beam (102) passes through the spatial beam modulator (310);
   an X-ray detection system (100) positioned to receive the X-ray beam (102) additionally modulated by the sample (214) and configured to detect a speckle pattern generated by the spatial beam modulator (310), the X-ray detection system (100) comprising:

   a spatially resolved detector with an effective pixel size sufficient to capture shifts in the speckle pattern caused by refraction of the X-ray beam (102) upon traveling through the spatial beam modulator (310) and through the sample (214);
   wherein the system (200) is configured such that the source-to-detector distance (304) is less than 100 centimeters.

2. The X-ray microscopy system (200) of claim 1, wherein the X-ray detection system (100) further comprises a scintillator (74) configured to convert X-rays into light and an optical system configured to collect and focus the light from the scintillator (74) onto the spatially resolved detector.

3. The X-ray microscopy system (200) of claim 1, wherein the laboratory X-ray source (202) is configured to obtain a focal spot size of less than at least 5 micrometers; preferably of less than 3 micrometers.

4. The X-ray microscopy system (200) of claim 1, wherein the spatial beam modulator (310) is a random phase object.

5. The X-ray microscopy system (200) of claim 4, wherein the spatial beam modulator (310) comprises a piece of silicon carbide (SiC) sandpaper.

6. The X-ray microscopy system (200) of claim 1, wherein the spatial beam modulator (310) comprises a grating.

7. The X-ray microscopy system (200) of claim 1, wherein the effective pixel size is less than 5 micrometers.

8. The X-ray microscopy system (200) of claim 7, wherein the effective pixel size is less than 300 nanometers.

9. The X-ray microscopy system (200) of claim 1, wherein the scintillator (74) has a thickness of less than 10 micrometers.

10. The X-ray microscopy system (200) of claim 1, wherein the laboratory X-ray source (202) is configured to generate X-rays with energies of less than 50 keV.

11. The X-ray microscopy system (200) of claim 10, wherein the X-ray energies are less than 20 keV.

12. A method for simultaneous X-ray phase contrast and dark-field imaging of a sample (214), the method comprising the steps:

   generating an at least partially coherent X-ray beam (102) using a laboratory X-ray source (202);
   passing the X-ray beam (102) through a spatial beam modulator (310) to generate a speckle pattern in a field of view, FOV;
   positioning the sample (214) in the beam (102), before the beam (102) passes through the spatial beam modulator (310) or after the beam (102) passes through the spatial beam modulator (310);
   detecting the X-ray beam (102) after it has passed through the sample (214) using an X-ray detection system (100) comprising a spatially resolved detector with an effective pixel size sufficient to capture shifts and contrast degradation in the speckle pattern;

obtaining a reference speckle image without the sample (402; 420) and obtaining a sample speckle image with the sample (406; 422) in the FOV;

registering the reference and sample speckle images (428; 430);

tracking shifts in the speckle patterns between the reference and sample images to determine phase gradients (408); and

integrating the phase gradients to produce a phase image of the sample and analyzing contrast changes of the speckle patterns to determine a darkfield signal (410; 432);

wherein a source-detector distance (306) is less than 100 centimeters and preferably less than 60 centimeters.

13. The method of claim 12, further comprising repeating the steps of obtaining speckle images while rotating and/or translating the sample (422; 424; 426), and reconstructing (434) a three-dimensional tomographic image of the sample (214).

14. The method of claim 12, wherein tracking shifts in the speckle patterns comprises using a correlation-based method or a distance-based method.

15. The method of claim 12, wherein integrating the phase gradients comprises using Fourier methods or variational methods to compute the integrated phase.

Fig. 1A     Fig. 1B     Fig. 1C

Fig. 2

Fig. 3

```
┌────────────────────────────────────┐
│   Capture Reference Image (Both     │ ─── 402
│    Object and Pattern Absent)       │
└────────────────────────────────────┘
                  │
                  │ k=1
                  ▼
┌────────────────────────────────────┐
│  Image the k-th Pattern with        │ ─── 404
│           Object Absent             │ ◄──┐
└────────────────────────────────────┘    │
                  │                        │ if k<K,
                  │                        │ k=k+1
                  ▼                        │
┌────────────────────────────────────┐    │
│  Image that k-th Pattern with       │ ─── 406
│         Object Present              │ ───┘
└────────────────────────────────────┘
                  │
                  │ if k=K
                  ▼
┌────────────────────────────────────┐
│  Compute Speckle Shifts and         │ ─── 408
│  Contrast Changes that Best Fits    │
│          All K Patterns             │
└────────────────────────────────────┘
                  │
                  ▼
┌────────────────────────────────────┐
│  Compute Phase Gradient, and        │ ─── 410
│  Darkfield from Tracked Shifts and  │
│  Contrast Changes. Integrate        │
│  Phase Gradients to Get Phase Image │
└────────────────────────────────────┘
```

# Fig. 4A

Capture Reference Image
(Both Object and Pattern Absent) ⟶ 420

↓ 422

Rotate Sample (Along Rotation Axis)
to Angle n= 1 (the Angle for First
Projection); Capture Image with
Object Present and Pattern Absent

↓ 424

Present the k-th Pattern, and Lock
the Pattern (Both Object and Pattern
Present). Rotate the Object to All N
Projection Angles, and Capture Image
at Each Angle (N Images in Total)

↓ 426

Move the Sample Outside FOV
(e.g., by Lowering the Sample), and
Capture an Image with Pattern k
Present, and Object Absent

↓ 428

Register All the N Images for
Each Pattern k, Based on
the Pattern Images

↓ 430

Register All the Object Only Images,
and Use the Displacement Information
to Register Images Taken with
Different Patterns

k=1,n=1

if k<K,
k=k+1

Multiple Projections
Capture (e.g.,for a
Tomography), Using K
Patterns per Projection,
and have N Projections in
Total

432

Process Registered
Images Taken
at Each Projection
Angle n; Compute
the Phase
and Darkfield Image
for Each Projection,
Using the K-patterned
Images Taken at that
Projection

434

Use a
Tomography
Reconstruction
Method to
Reconstruct the
Darkfield and
Phase
Tomography

Fig. 4B

Intensity
(Objects Only)

Intensity
(Object + Sandpaper)

Fig. 5A

Fig. 5B

Fig. 5C

Fig. 5D

Horizontal     Vertical

500um

PMMA

Air

Glue

Carbon Fiber

Fig. 5E      Fig. 5F      Fig. 5G      Fig. 5H

| | Europäisches Patentamt European Patent Office Office européen des brevets | **EUROPEAN SEARCH REPORT** | **Application Number** EP 25 22 6615 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZANETTE I. ET AL: "Speckle-Based X-Ray Phase-Contrast and Dark-Field Imaging with a Laboratory Source", PHYSICAL REVIEW LETTERS, vol. 112, no. 25, 26 June 2014 (2014-06-26), XP093385802, US ISSN: 0031-9007, DOI: 10.1103/physrevlett.112.253903 * figure 1a * ----- | 1-15 | INV. G01N23/041 |
| X | KONSTANTIN M. PAVLOV ET AL: "Directional dark-field implicit x-ray speckle tracking using an anisotropic-diffusion Fokker-Planck equation", ARXIV.ORG CORNELL UNIVERSITY LIBRARY, 201 OLIN LIBRARY CORNELL UNIVERSITY ITHACA, NY 14853, 26 September 2021 (2021-09-26), XP091046118, * abstract * * paragraphs [00I.], [III.] * ----- | 1,2,4, 10,11 | |
| X | VITTORIA FABIO A. ET AL: "X-ray absorption, phase and dark-field tomography through a beam tracking approach", SCIENTIFIC REPORTS, vol. 5, no. 1, 6 November 2015 (2015-11-06), XP093384622, US ISSN: 2045-2322, DOI: 10.1038/srep16318 * pages 1,3,4 * ----- -/-- | 1,2,6, 10,11 | **TECHNICAL FIELDS SEARCHED (IPC)** G01N G21K |

The present search report has been drawn up for all claims

| Place of search | Date of completion of the search | Examiner |
|---|---|---|
| The Hague | 9 April 2026 | Kraus, Leonie |

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 22 6615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Thomas Thüring: "Compact X-ray grating interferometry for phase and dark-field computed tomography in the diagnostic energy range", PhD Dissertation No. 21321, 26 November 2013 (2013-11-26), XP055179280, Zürich, Switzerland Retrieved from the Internet: URL:http://e-collection.library.ethz.ch/es erv/eth:7606/eth-7606-02.pdf#search= [retrieved on 2015-03-25] * pages 98,117 * * pages 128,143 * * page 130 * ----- | 1-15 | |
| A | US 2021/244374 A1 (ZHAO YING [US]) 12 August 2021 (2021-08-12) * paragraphs [0401], [0434], [0557] * ----- | 1-15 | |
| A | YANG FEI ET AL: "X-ray dark-field contrast imaging of water transport during hydration and drying of early-age cement-based materials", MATERIALS CHARACTERIZATION. ELSEVIER, NEW YORK, NY., US, vol. 142, 20 June 2018 (2018-06-20), pages 560-576, XP085419634, ISSN: 1044-5803, DOI: 10.1016/J.MATCHAR.2018.06.021 * pages 563-565 * ----- | 1-15 | **TECHNICAL FIELDS SEARCHED (IPC)** |

The present search report has been drawn up for all claims

| Place of search | Date of completion of the search | Examiner |
|---|---|---|
| The Hague | 9 April 2026 | Kraus, Leonie |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ...................................................................................

& : member of the same patent family, corresponding document

## ANNEX TO THE EUROPEAN SEARCH REPORT
## ON EUROPEAN PATENT APPLICATION NO.

EP 25 22 6615

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2026

| Patent document cited in search report | Publication date | Patent family member(s) | | Publication date |
|---|---|---|---|---|
| US 2021244374 A1 | 12-08-2021 | AU | 2019314380 A1 | 18-02-2021 |
| | | CA | 3107673 A1 | 06-02-2020 |
| | | CN | 112739264 A | 30-04-2021 |
| | | EP | 3829441 A1 | 09-06-2021 |
| | | IL | 280341 A | 01-03-2021 |
| | | JP | 7443331 B2 | 05-03-2024 |
| | | JP | 2021533348 A | 02-12-2021 |
| | | JP | 2024075566 A | 04-06-2024 |
| | | KR | 20210041587 A | 15-04-2021 |
| | | US | 2021244374 A1 | 12-08-2021 |
| | | US | 20260007382 A1 | 08-01-2026 |
| | | WO | 2020028422 A1 | 06-02-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 12130392 B, Xu and vom Hagen

**Non-patent literature cited in the description**

- **ENDRIZZI** ; **MARCO**. X-ray phase-contrast imaging. *Nuclear instruments and methods in physics research section A: Accelerators, spectrometers, detectors and associated equipment*, 2018, vol. 878, 88-98
- **MOMOSE** ; **ATSUSHI**. X-ray phase imaging reaching clinical uses. *Physica Medica*, 2020, vol. 79, 93-102
- **PFEIFFER** ; **FRANZ et al.** Phase retrieval and differential phase-contrast imaging with low-brilliance X-ray sources. *Nature Physics*, 2006, vol. 2 (4), 258-261
- **OLIVO** ; **ALESSANDRO** ; **ROBERT SPELLER**. A coded-aperture technique allowing X-ray phase contrast imaging with conventional sources. *Applied Physics Letters*, 2007, vol. 91 (7)
- **ZANETTE, I. et al.** Speckle-based X-ray phase-contrast and dark-field imaging with a laboratory source. *Physical Review Letters*, 2014, vol. 112, 25
- **ZDORA** ; **MARIE-CHRISTINE**. State of the art of X-ray speckle-based phase-contrast and dark-field imaging. *Journal of Imaging*, 2018, vol. 4 (5), 1-36
- **PFEIFFER** ; **FRANZ et al.** Hard-X-ray dark-field imaging using a grating interferometer. *Nature Materials*, 2008, vol. 7 (2), 134-137
- **ROMANO L. et al.** Microfabrication of X-ray Optics by Metal Assisted Chemical Etching: A Review. *Micromachines*, 2020, vol. 11 (589), 1-23

- **QUÉAU** ; **YVAIN** ; **JEAN-DENIS DUROU** ; **JEAN-FRANGOIS AUJOL**. Normal integration: a survey.. *Journal of Mathematical Imaging and Vision*, 2018, vol. 60 (4), 576-593
- **FRANKOT** ; **ROBERT T.** ; **RAMA CHELLAPPA.** A method for enforcing integrability in shape from shading algorithms.. *IEEE Transactions on pattern analysis and machine intelligence*, 1988, vol. 10 (4), 439-451
- **HORN** ; **BERTHOLD KP** ; **MICHAEL J. BROOKS.** The variational approach to shape from shading.. *Computer Vision, Graphics, and Image Processing*, 1986, vol. 33 (2), 174-208
- **SMITH** ; **RONAN et al.** X-ray directional dark-field imaging using Unified Modulated Pattern Analysis.. *PLOS One*, 2022, vol. 17 (8), e0273315
- **ZDORA** ; **MARIE-CHRISTINE et al.** X-ray phase tomography with near-field speckles for three-dimensional virtual histology. *Optica*, 2020, vol. 7 (9), 1221-1227
- **HAGEN, C.K. et al.** Low-dose phase contrast tomography with conventional X-rayX-ray sources.. *Medical Physics Letter*, 2014, vol. 41 (7)
- **DOHERTY** ; **ADAM et al.** Edge-Illumination X-Ray Dark-Field Tomography. *American Physical Society*, 2023, vol. 19
- **BECH, M. et al.** Quantitative X-ray dark-field computed tomography. *Phys. Med. Biol*, 2010, vol. 55, 5529-5539